Europäisches Patentamt

European Patent Office

Office européen des brevets

(11) Publication number: **0 256 832 B1**

## EUROPEAN PATENT SPECIFICATION

(45) Date of publication of patent specification: **15.04.92**  (51) Int. Cl.5: **C01F 7/56, A61K 7/38**

(21) Application number: **87307077.5**

(22) Date of filing: **10.08.87**

---

(54) **Preparation of basic aluminium halides.**

---

(30) Priority: **11.08.86 GB 8619552**

(43) Date of publication of application:
**24.02.88 Bulletin  88/08**

(45) Publication of the grant of the patent:
**15.04.92 Bulletin  92/16**

(84) Designated Contracting States:
**AT BE CH DE ES FR GB GR IT LI NL SE**

(56) References cited:
**AU-A- 150 410**
**GB-A- 2 027 419**
**US-A- 2 196 016**
**US-A- 4 359 456**

(73) Proprietor: **UNILEVER PLC**
**Unilever House Blackfriars P.O. Box 68**
**London EC4P 4BO(GB)**

(84) Designated Contracting States:
**GB**

(73) Proprietor: **UNILEVER NV**
**Burgemeester s'Jacobplein 1 P.O. Box 760**
**NL-3000 DK Rotterdam(NL)**

(84) Designated Contracting States:
**BE CH DE ES FR GR IT LI NL SE AT**

(72) Inventor: **Inward, Peter William**
**High Close Wetstone Lane West Kirby**
**Wirral Merseyside L48 7HG(GB)**

(74) Representative: **Rogers, John Edward et al**
**UNILEVER PLC Patents Division P.O. Box 68**
**Unilever House**
**London EC4P 4BO(GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to the preparation of basic aluminium halides, more particularly to the preparation of a basic aluminium chloride or bromide having good antiperspirant activity.

Basic aluminium chlorides and to a lesser extent bromides have been available commercially for many years both in the form of aqueous solutions and in the form of hydrated powders. One well known application of these products is as the active ingredient of antiperspirant products. For such application the basic aluminium chlorides especially are commercially available in varying degrees of basicity, which can be expressed in terms of the aluminium to chlorine ratio which generally ranges from about 2:1 to about 0.9:1. The products available commercially in the form of aqueous solutions generally have an aluminium concentration of about 12% by weight. The powdered forms of the basic aluminium chlorides and bromides are frequently obtained by spray-drying aqueous solutions of these basic halides. These solutions are usually made by dissolving aluminium metal in an aqueous solution of aluminium chloride or bromide at an elevated temperature and such method is described in US-A-2 196 016 (Huehn et al) and AU-A-150,410 (Elliotts & Australian Drug Proprietary Ltd). The amount of aluminium metal dissolved is controlled so as to correspond to a final product having the desired aluminium to halide ratio. Furthermore, the concentration of the aluminium halide solution is chosen so as to give a final product having an aluminium concentration of around 12% by weight which is most advantageous for commercial sale or for conversion to a powdered form, eg. by spray drying such solutions.

In US-A-4 359 456 (Gosling et al), the disclosure of which is incorporated herein by reference, there is described a process for making from commercially available materials a basic aluminium chloride or bromide having enhanced antiperspirant efficacy. The process described by the prior patent involves first forming a solution of the basic aluminium halide having an aluminium concentration of 2.5 to 8.5% by weight. This can be prepared by dissolving in water a commercially available powder of a basic aluminium halide (as in Example 2) or by diluting with water a commercially available solution of a basic aluminium halide (as in Example 9). The solution is then heated at a temperature of 500 to 140°C so as to modify the distribution of the polymeric species within such solution in such manner that the modified basic aluminium halide has at least 20%, preferably at least 25%, of the aluminium contained in the Band III fraction as determined by a chromatographic analytical procedure described in the patent. The products obtained having such high contents of aluminium in the Band III fraction have superior antiperspirant activity. Powdered forms of the improved basic aluminium halides are obtained by drying the heat-treated solutions.

In our copending European Patent Application No. 86 300916.3 (EP-A-0191 628 which does not form part of the State of the Art under A54(2)EP), we have described a simplified process for making a powder of a basic aluminium chloride or bromide having a high proportion of the aluminium in the Band III fraction without the need to heat-treat a pre-formed solution of a basic aluminium halide. By the process described in this previous application a basic aluminium halide having a high content of aluminium in the Band III fraction is prepared directly, the process comprising the steps of:-

a) dissolving metallic aluminium in an aqueous starting solution of an aluminium compound selected from aluminium chloride and aluminium bromide, said starting solution being held at a temperature of about 50°C to about 105°C, preferably 50°C to 95°C, for a time just long enough to dissolve sufficient aluminium to produce an aqueous solution of a final basic aluminium halide having an aluminium:halide molar ratio in the range 1.7:1 to 2.2:1, the concentration of the aluminium in the starting solution and the amount of aluminium dissolved being such that the aluminium concentration in the solution of the final basic aluminium halide is from 0.8% to 6.75% by weight and said final basic aluminium halide having at least 20% of the aluminium contained in the Band III fraction; and

b) drying the solution of the final basic aluminium halide so as to give the final basic aluminium halide in the form of an hydrated powder having at least 20% of the aluminium contained in the Band III fraction.

The present invention also has as an object the direct preparation of a final basic aluminium halide having an aluminium:halide molar ratio in the range 1.7:1 to 2.2:1 and having a high content of aluminium in the Band III fraction. The present invention is based on our appreciation that such products can be produced by a procedure similar to that described in our previous application but starting from a basic aluminium halide such as an aluminium dichlorhydrate or aluminium sesquichlorhydrate.

According to the invention there is provided a process of making a basic aluminium halide having an aluminium:halogen molar ratio of from 1.7 to 2.2 : 1 and having at least 20% of the aluminium contained in the Band III fraction which process comprises the steps of:-

a) dissolving metallic aluminium in an aqueous starting solution of a basic aluminium halide selected from basic aluminium chlorides and basic aluminium bromides having an A1:halide molar ratio up to 1.8:1, preferably in the range 0.9:1 to 1.5:1, said starting solution being held at a temperature of about 50°C to about 105°C, preferably 50°C to 95°C, for a time just long enough to dissolve sufficient aluminium to produce an aqueous solution of a final basic aluminium halide having an aluminium:halide molar ratio which exceeds by at least about 0.3 that of the starting basic aluminium halide and is in the range 1.7:1 to 2.2:1, the concentration of the aluminium in the starting solution and the amount of aluminium dissolved being such that the aluminium concentration in the solution of the final basic aluminium halide is from 0.8% to 6.75% by weight and said final basic aluminium halide having at least 20% preferably at least 25%, of the aluminium contained in the Band III fraction; and optionally

b) drying the solution of the final basic aluminium halide so as to give the final basic aluminium halide in the form of an hydrated powder having at least 20%, preferably at least 25%, of the aluminium contained in the Band III fraction.

Characterisation of materials containing species differing in size by means of size exclusion chromatography is generally known. The size exclusion chromatographic procedures for characterising the basic aluminium compounds of this invention will now be described.

The analytical procedure is performed on a stainless steel column of dimensions 25 to 30 cm high and of 7 mm internal diameter packed with porous silica of nominal particle size 5 $\mu$m and pore size of 6 nm, which silica has been deactivated by silylation to eliminate adsorption and unwanted ionic effects in size exclusion separations. A suitable silica is that available commercially as LiChrosorb RP-2 (trade mark). The silica employed by the Applicants in deriving analytical data given herein had a cumulative undersize particle size distribution by weight of 10% less than 5 $\mu$m, 50% less than 6 $\mu$m and 90% less than 7 $\mu$m.

The column is fitted at the bottom with a zero dead volume fitting containing a 2 $\mu$m mesh stainless steel bed support. The silica is packed into the column by the high pressure slurry method (see Practical High Performance Liquid Chromatography, Edited by C F Simpson, 1976, Appendix II), using dichloromethane as the packing medium.

After packing, the column is capped with another zero dead volume fitting containing a 2 $\mu$m stainless steel mesh. The packed column is then eluted with 200 ml of methanol at a flow rate of about 10 ml/min, using a high pressure pump, to consolidate the bed and wash out the packing medium.

A differential refractive index monitor (eg Waters R401) is used to detect sample fractions as they are eluted. It is linked to a pen recorder to provide a chromatogram and to an integrator which measures the elution times of the fractions and the relative chromatographic band areas. The integrator is required to measure areas of bands not resolved to the baseline by dropping perpendiculars from the lowest point of the valleys separating the bands to the baseline.

The column packing should be tested according to the procedure of Bristow & Knox (Chromatographia, Volume 10, No 6, June 1977, pp 279-89) for reverse phase materials and should generate at least 20,000 plates/metre for the test component phenetole.

To prepare test solutions of the materials for analysis those already in solution are used undiluted unless the aluminium concentration exceeds 2.5% by weight in which case they are diluted with deionized water to give a solution containing 2.5% by weight aluminium. Solid materials (eg spray dried powders) are dissolved in deionized water to give a solution containing 2.5% by weight aluminium. Solids or solutions which do not disperse readily on shaking are dispersed by treatment in an ultrasonic bath (eg. Sonicor Model No. SC-150-22TH) for 5 minutes. The solutions prepared in this way are filtered through a 25 mm diameter membrane having a pore size of 0.025 micrometres to give the test solutions. The preparation of a test solution is carried out immediately prior to application of a sample to the column.

A sample of the test solution containing about 2 to 4 micromoles of aluminium is applied to the top of the column by means of a precision micro-litre syringe and a sample injection port. The sample is eluted with a 1 x $10^{-2}$ M aqueous nitric acid solution at a flow rate of 1.0ml/min using a high pressure pump.

Eluted fractions of a test sample are characterised by means of the ratio of their retention times to the retention time of the totally included species. In the case of basic aluminium chlorides the totally included species arises from hydrochloric acid (which is present in solutions of basic aluminium chlorides) as can be shown by comparison of its retention time with that of a sample of hydrochloric acid. Using columns satisfying the above description and employing a standard solution of a basic aluminium chloride prepared as described below, the Applicants have obtained separation into four aluminium-containing fractions having relative retention times within the ranges indicated.

|  | Band I | Band II | Band III | Band IV |
|---|---|---|---|---|
| Relative Retention Time Range | 0.62-0.70 | 0.71-0.75 | 0.76-0.82 | 0.83-0.97 |

The standard basic aluminium chloride solution is prepared as a solution containing 12.5% by weight

EP 0 256 832 B1

aluminium from 19.1 g of aluminium chloride hexahydrate, 10.5 g of 99.9% pure aluminium wire (0.76 mm diameter, cut in approximately 1 cm lengths and degreased by washing in acetone) and 70.4 g of deionised water. The mixture is stirred and heated at 80-90°C under a reflux condenser until all of the aluminium is dissolved. Any traces of insoluble solids are removed by filtration to give a clear solution.

When this material is analysed by the size exclusion chromatographic procedure described herein, there are obtained the following four fractions having typical relative retention times and chromatographic band areas expressed as percentages of the total chromatographic band area representing aluminium-containing material.

|  | Band I | Band II | Band III | Band IV |
|---|---|---|---|---|
| Relative Retention Time | 0.65 | 0.73 | 0.79 | 0.91 |
| Band Area % of total aluminium band area | 39 | 51 | 4 | 6 |

A standard basic aluminium bromide solution was prepared in a manner similar to that as described above for the chloride by employing 29.7 g aluminium bromide hexahydrate, 10.7 g aluminium wire and 59.6 g water. Analysis again gave four fractions having the relative retention times and chromatographic band areas expressed as percentages of the total chromatographic band area representing aluminium-containing material indicated below.

|  | Band I | Band II | Band III | Band IV |
|---|---|---|---|---|
| Relative Retention Time | 0.62 | 0.74 | 0.80 | 0.94 |
| Band Area % of total aluminium band area | 34 | 56 | 7 | 3 |

The standard solutions contained 0% aluminium as polymers greater than 10nm in effective diameter.

It will be appreciated by those skilled in the art that mechanisms of separation other than the principal mechanism of size exclusion may play a part in this type of chromatography. Examples of the processes would be adsorption effects and hydrodynamic effects. Thus although it is possible for a given column and constant operating conditions to lead to invariable relative retention times, minor variations in particle size range and pore size distribution of the column packing material may lead to slight differences in relative retention times.

Quantitatively, the amount of aluminium in the Band III fraction expressed as a percentage of the total aluminium of the compound under test is readily determined from the area of its band on the chromatogram. This percentage is derived from the expression

$$\% \text{ Aluminium} = (100-A) \times \frac{\text{Area of band corresponding to Band III fraction}}{\text{Sum of the areas of the bands corresponding to the aluminium-containing fractions}}$$

where A is the percentage of the total aluminium which is contained in polymers greater than 10nm and is determined by the method described hereinafter.

In experiments performed by the Applicants using certain samples of test materials, the complete elution of all the applied aluminium in a sample was checked by direct analysis of another sample of the same volume by plasma emission spectrophotometry. The correlation between band area percentage and aluminium percentage was also verified by direct analysis. The fractions were collected as they emerged from the refractive index monitor and their individual aluminium contents measured also by plasma emission spectrophotometry.

For the determination of percentage aluminium in polymeric species having a size greater than 10nm there may be used a 1.2m x 6.0mm column packed with porous silica beads of particle size 75-125 $\mu$m and

4

of surface area 350-500 m$^2$/g, and having a maximum pore size of 10nm. A suitable silica is that available commercially as Porasil A (trade mark). The use of Porasil silica beads as a column packing in chromatography is referred to in "Gel Permeation Chromatography" by K H Altgelt and L Segal, 1971, pages 16-18. Using an eluent consisting of an aqueous solution containing 0.1 M sodium nitrate and 0.01M nitric acid the silica was conditioned before use by passage of a large sample (eg 0.2 ml of a 5% w/w solution) of an aqueous aluminium chlorhydrate solution heat-treated in a manner known to lead to the formation of polymers of a size greater than 10nm (see US-A-4 359 456). Samples to be tested were made up in deionized water to approximately 0.2 M aluminium and thoroughly dispersed by treatment (5 minutes) in an ultrasonic bath. About 0.2 ml samples of approximately 0.2 M aluminium solutions were applied to the column by a sample loop system and eluted with the above eluent at a flow rate of 2ml/min. A differential refractive index monitor linked to a pen recorder was used to detect fractions as they were eluted. These fractions were collected and analysed for aluminium by atomic absorption spectrometry. Complete elution of all aluminium applied in each sample was checked by direct analysis of another sample of the same volume. The percentage of the total aluminium which appeared in the fraction eluted at the void volume (sometimes called the exclusion volume) of the column was considered as that deriving from polymeric material of a size greater than 10nm in effective diameter.

In the reaction between aluminium and the aqueous solution of a basic aluminium halide a small quantity of mercury can be included in the reaction mixture to act as a catalyst. Aluminium in the form of, for example, wire, foil, granules or powder may be used.

The aqueous starting solution of the basic aluminium halide may be formed by dissolving the basic aluminium halide which is in solid form in water, or by diluting with water a relatively concentrated solution of the basic aluminium halide, a number of which are readily available commercially.

An essential feature of the process of the invention for making a basic aluminium chloride or bromide in powder form with high antiperspirant activity is the use of proportions of reactants such that when the desired final basic aluminium halide is formed, usually at the point when substantially all the aluminium has dissolved, the aluminium concentration of that solution is relatively low and in the range 0.8% to 6.75% by weight, preferably 2.7% to 5.4% by weight. The reaction is most conveniently carried out at atmospheric pressure although elevated pressures, for example, can be used. The formation of a product having a high content of aluminium in the Band III fraction is favoured by the choice of a starting material of lower A1: halide ratio, eg about 1:1, by a higher final aluminium:halide ratio, eg. 1.8 and above, and by a lower aluminium concentration of the final solution, eg. 2.7% by weight and below. Within the temperature range of 50° to 105°C referred to, temperature has relatively little effect on the proportion of aluminium in the Band III fraction of the final basic aluminium halide, although lower temperatures may tend to favour an increased proportion of aluminium in the Band III fraction. Polymers with an effective diameter greater than 10nm may also be formed but if they are formed the amount of aluminium contained in these polymers is in general low. Amounts of these polymers containing aluminium in excess of 2% of the total aluminium will tend to occur if at all only in reactions conducted at higher temperatures and in the preparation of products having higher aluminium:halide molar ratios in low concentrations. So far as the present invention is concerned the amount of aluminium in polymers of effective diameter greater than 10nm is not important.

It is an optional feature of the process of the invention that the solution of the final basic aluminium halide formed by dissolution of the metallic aluminium in the starting solution of a basic aluminium halide is dried to a hydrated powder. The drying may be carried out by known techniques and is desirably carried out without undue delay after the end of the reaction. Suitable methods are referred to in US-A-4 359 456. Spray drying and freeze drying are preferred because these methods give powders which on redissolving in water to the concentration prior to spray drying give solutions having similar characteristics to the original solution.

Preferrred final basic aluminium halides are those having at least 30% of the aluminium contained in the Band III fraction.

It is also preferred that the final basic aluminium halides produced by the process of the invention have an aluminium:halogen molar ratio of 1.9 to 2.1 : 1.

In the direct preparative procedure of the invention, under some conditions products containing a high proportion of the aluminium in the Band III species contain a substantial proportion of this component in the form of a polymer having a characteristic line in the $^{27}$Al NMR spectrum. This line is 62.5 ppm downfield from the resonance of Al$^{3+}$(6H$_2$O). This line has been attributed to the presence of a complex ion [Al$_{13}$O$_4$-(OH)$_{24}$(H$_2$O)$_{12}$]$^{7+}$ by Akitt et al (J.C.S. Dalton Transactions 1972 p604) the structure of which was first established by G Johansson (Acta Chem Scand 1960 Vol 14 p771). This ion has been subsequently referred to as the Al$_{13}$O$_{40}$ ion by Schonherr et al (Zeitschrift fur Anorganischen und Allgemeinen Chemie, 502, 113-122 (1983)).

The quantitative determination of the percentage of aluminium present in the $Al_{13}O_{40}$ ion will now be described.

The essence of the measurement is the comparison of the band area of the sharp band from the central Al atom of the $Al_{13}O_{40}$ species [$\delta$ = 62.5 ppm with respect to $Al^{3+}$ hexaaquo = 0] with the area of the aluminate ion band [$\delta$ = 80 ppm]. The aluminate standard (concentration about 0.1M) is contained in a sealed 5 mm NMR tube which is held concentrically inside a 10 mm NMR tube. The annular space between the two tubes is filled with analyte solution. The aluminate standard is freshly made up and calibrated for each series of experiments.

For calibration purposes, this annular space is filled with an aqueous solution containing a known concentration (eg 0.02M) of an aluminium salt, such as Analar Trade mark aluminium nitrate. From the [27] Al NMR spectrum of this system, the area of the aluminate ion band ($\delta$ = 80 ppm) is compared with that of the $Al^{3+}$ band ($\delta$ = 0 ppm), the effective concentration of aluminium in the aluminate-containing tube being given by the equation:

$$M_S = I_S \times \frac{M_A}{I_A}$$

where $M_s$     is the effective molar concentration of aluminium in the aluminate solution

$M_A$     is the molar concentration of aluminium in the $Al(NO_3)_3$ solution

$I_s$     is the area of the aluminate band

$I_A$     is the area of the $Al^{3+}$ band from $Al(NO_3)_3$.

Thus $M_s$ is the 'calibration factor' of the sealed tube of aluminate solution, and the use of this tube, as indicated above, with subsequent analyte solutions of unknown composition will allow the amount of aluminium associated with any particular sharp spectral band from the analyte solution to be determined.

Measurement of the central aluminium band of $Al_{13}O_{40}$ species determines only one thirteenth of the aluminium content (the other 12 aluminium atoms produce a resonance band which is too broad to be measured accurately). Hence the total amount of aluminium present in the $Al_{13}O_{40}$ species is obtained by multiplying the area of the central band ($\delta$ = 62.5 ppm) by 13.

The concentration of aluminium thus calculated to be present in the $Al_{13}O_{40}$ species is expressed as a percentage of the total aluminium concentration of the analyte solution which if unknown may be determined eg. by atomic absorption spectrometry.

All NMR measurements were carried out using a Bruker W.M.360 spectrometer with a probe free from background aluminium signal. Sample tubes were made from quartz which is also free from background aluminium signal. The aluminium concentration of the analyte solutions whose $Al_{13}O_{40}$ concentration was to be determined was in the range 0.3M to 1.0M.

In the process of the present invention the production of the $Al_{13}O_{40}$ ion is strongly influenced by the temperature of the reaction with the lower temperatures favouring production of this particular aluminium-containing species. Since the $Al_{13}O_{40}$ species constitutes part of the species present in the Band III fraction, those conditions which favour the latter species also, of course, require to be employed. A further factor favouring production of the $Al_{13}O_{40}$ species is the use of shorter reaction times such as can result from the use of more reactive forms of aluminium, such as powders of high surface area, and use of catalysts.

In one embodiment of the process of the invention at least 20% of the aluminium of the final basic aluminium compound formed in step (a) is in the form of $Al_{13}O_{40}$ species.

The powdered basic aluminium halides produced in accordance with this invention as described above are particularly suitable for use in antiperspirant compositions in which they are suspended in a carrier medium. A number of suitable carrier mediums for suspension type antiperspirant compositions are disclosed in US-A-4 359 456 (Gosling et al).

The following Examples illustrate the invention.

EXAMPLE 1

Aluminium dichlorhydrate powder (35.0g) having an Al:Cl molar ratio of 1.1:1 and having an aluminium content of 20.4% was dissolved in water (208.6g). This solution was placed in a conical flask fitted with a thermometer and air condenser. A magnetic stirrer bar was added and the temperature raised to 55°C with stirring on a magnetic stirrer-hotplate. Aluminium powder (Alpoco 200/Dust-trade mark) 99.7% pure (6.3g) was added during the warm-up stage and the temperature was maintained at 55°C. The flask was cooled with water if necessary. The reaction was completed in 29 hours. The reaction mixture was filtered to give a clear solution.

EXAMPLE 2

An aqueous solution (85.2g) of an aluminum sesquichlorhydate having an Al:Cl molar ratio of 1.4:1, the solution having an aluminium content of 11.0%, was diluted with water (160.7g). This solution was placed in a conical flask fitted with a thermometer and air condenser. A magnetic stirrer-bar was added and the temperature raised to 90°C with stirring on a magnetic stirrer-hotplate. Aluminium powder (Alpoco 200/Dust) 99.7% pure (4.1g) was added in portions. The first portion (1.3g) was added during the warm-up stage and the remainder was added as quickly as was consistent with a controlled reaction, and maintenance of the temperature at 90°±5°C. The reaction was completed in 2 hours 45 min. The reaction mixture was filtered to give a clear solution.

EXAMPLE 3

Aluminium sesquichlorhydrate beads (18.6g) having an Al:Cl molar ratio of 1.32:1 was dissolved in water (223.3g). This solution was placed in a conical flask fitted with a thermometer and air condenser. A magnetic stirrer bar was added and the temperature raised to 90°C with stirring on a magnetic stirrer-hotplate. Aluminium powder (Alpoco 200/Dust) 99.7% pure (2.2g) was added during the warm up stage and the temperature was maintained at 90±5°C. The reaction was completed in 20 hours 30 mins.

EXAMPLE 4

Example 3 was reheated using aluminium sesquichlorhydrate beads (6.4g), water (242.9g) and aluminium powder (0.8g) save that the reaction was carried out at 55°C at which temperature it was completed in 9 hours.

EXAMPLE 5

Example 2 was repeated save that the reaction was carried out at 55°C and all the aluminium powder was added during the warm-up stage. The reaction was completed in 8 hours 50 mins.

EXAMPLE 6

An aqueous solution (42.6g) of an aluminium sesquichlorhydrate having an Al:Cl molar ratio of 1.4:1 was diluted with water (205.4g). This solution was placed in a conical flask fitted with a thermometer and air condenser. A magnetic stirrer-bar was added and the temperature raised to 55°C on a magnetic stirrer-hotplate. Aluminium powder (Alpoco 200/Dust) 99.7% pure (2.04g) was added during the warm up stage and the temperature maintained at 55°C. The reaction continued for 9 hours. Unreacted aluminium amounted to 0.26g.

The Examples are summarised in the following Table.

### TABLE

| Example | Final Al concentration ($\%$ w/w) | Final Al/Cl molar ratio | Reaction Temp (°C) | $\%$Al in Band III (Al$_{13}$ polymer)* |
|---------|------------------------------------|-------------------------|--------------------|------------------------------------------|
| 1 | 5.4 | 2.0 | 55 | 68 |
| 2 | 4.9 | 1.8 | 90 | 50 |
| 3 | 2.7 | 2.0 | 90 | 48 (5) |
| 4 | 0.9 | 2.0 | 55 | 80 (39) |
| 5 | 5.0 | 1.9 | 55 | 48 |
| 6 | 2.4 | 1.8 | 55 | 62 |

\* the values in parenthesis represent the $\%$Al$_{13}$ polymer as measured by $^{27}$Al nmr.

The basic aluminium chloride solutions obtained according to the above Examples may be dried to give the final product in the form of a hydrated powder. Suitable drying methods are spray drying and freeze drying, such as by the procedures described in the Examples of European patent application EP-A-0 191 628.

**Claims**

1. Process of making a basic aluminium halide having an aluminium:halogen molar ratio of from 1.7 to 2.2 : 1 and having at least 20% of the aluminium contained in the Band III fraction which process comprises dissolving metallic aluminium in an aqueous starting solution of a basic aluminium halide selected from basic aluminium chlorides and basic aluminium bromides having an Al:halide molar ratio up to 1.8:1, said starting solution being held at a temperature of about 50°C to about 105°C for a time long enough to dissolve sufficient aluminium to produce an aqueous solution of a final basic aluminium halide having an aluminium:halide molar ratio which exceeds by at least about 0.3 that of the starting basic aluminium halide and is in the range 1.7:1 to 2.2:1, the concentration of the aluminium in the starting solution and the amount of aluminium dissolved being such that the aluminium concentration in the solution of the final basic aluminium halide is from 0.8% to 6.75% by weight and said final basic aluminium halide having at least 20% of the aluminium contained in Band III fraction, and at least 20% of the aluminium of the solution of the final basic aluminium species is in the form of the Al$_{13}$O$_{40}$ species.

2. Process as claimed in Claim 1 wherein said starting solution is an aqueous solution of a basic aluminium halide having an Al:halide molar ratio in the range 0.9:1 to 1.5:1.

3. Process as claimed in Claim 1 or Claim 2 comprising the further step of drying the solution of the final basic aluminium halide so as to give the final basic aluminium halide in the form of an hydrated powder having at least 20% of the aluminium contained in the Band III fraction.

4. Process as claimed in Claim 3 wherein the hydrated powder of the final basic aluminium halide has at least 25% of the aluminium contained in the Band III fraction and at least 20% of the aluminium in the Al$_{13}$O$_{40}$ species.

EP 0 256 832 B1

**5.** Process as claimed in Claim 3 or Claim 4 wherein the final basic aluminium halide powder has an aluminium:halide molar ratio of 1.9 to 2.1:1.

**6.** Process as claimed in any of Claims 3 to 5 wherein the drying of the solution of the final basic aluminium halide is carried out by spray drying or freeze drying.

**7.** Process as claimed in any of the preceding claims wherein the starting solution of the basic aluminium halide is a solution of a basic aluminium chloride.

**Revendications**

**1.** Procédé de préparation d'un halogénure d'aluminium basique, présentant un rapport molaire aluminum:halogène de 1,7 à 2,2:1 et dont au moins 20 % de l'aluminium se trouve dans la fraction de bande III, procédé dans lequel on dissout l'aluminium métallique dans une solution aqueuse de départ d'un halogénure d'aluminium basique choisi parmi les chlorures d'aluminium basiques et les bromures d'aluminium basiques présentant un rapport molaire Al:halogénure allant jusqu'à 1,8:1, ladite solution de départ étant maintenue à une température d'environ $50\,^\circ$C à environ $105\,^\circ$C, pendant un temps suffisamment long pour dissoudre suffisamment d'aluminium afin d'obtenir une solution aqueuse d'un halogénure d'aluminium basique final présentant un rapport molaire aluminium:halogénure qui est supérieur d'au moins environ 0,3 à celui de l'halogénure d'aluminium basique de départ et se situe dans la gamme de 1,7:1 à 2,2:1, la concentration de aluminium dans la solution de départ et la quantité d'aluminium dissoute étant telles que la concentration d'aluminium dans la solution de l'halogénure d'aluminium basique final est de 0,8 % à 6,75 % en poids, tandis que au moins 20 % de l'aluminium dudit halogénure d'aluminium basique final se trouve dans la fraction de bande III, et au moins 20 % de l'aluminium de la solution de l'espèce aluminique basique finale se trouve sous la forme de l'espèce $Al_{13}O_{40}$.

**2.** Procédé tel que revendiqué dans la revendication 1, dans lequel ladite solution de départ est une solution aqueuse d'un halogénure d'aluminium basique présentant un rapport molaire Al:halogénure dans la gamme de 0,9:1 à 1,5:1.

**3.** Procédé tel que revendiqué dans la revendication 1 ou la revendication 2, comportant le stade ultérieur de sécher la solution d'halogénure d'aluminium basique final de façon à obtenir un halogénure d'aluminium basique final sous la forme d'une poudre hydratée dont au moins 20 % de l'aluminium se trouve dans la fraction de bande III.

**4.** Procédé tel que revendiqué dans la revendication 3, dans lequel la poudre hydratée de l'halogénure d'aluminium basique final présente au moins 25 % de l'aluminium contenu dans la fraction de bande III et au moins 20 % de l'aluminium dans l'espèce $Al_{13}O_{40}$.

**5.** Procédé tel que revendiqué dans la revendication 3 ou la revendication 4, dans lequel la poudre d'halogénure d'aluminium basique final présente un rapport molaire aluminium:halogénure de 1,9 à 2,1:1.

**6.** Procédé tel que revendiqué dans l'une quelconque des revendications 3 à 5, dans lequel le séchage de la solution d'halogénure d'aluminium basique final est réalisé par séchage par pulvérisation ou dessication par congélation.

**7.** Procédé tel que revendiqué dans l'une quelconque des revendications précécentes, dans lequel la solution de départ de l'halogénure d'aluminium basique est une solution de chlorure d'aluminium basique.

**Patentansprüche**

**1.** Verfahren zur Herstellung eines basischen Aluminiumhalogenids, das ein molares Verhältnis von Aluminium:Halogen von 1,7 bis 2,2 : 1 besitzt und wenigstens 20% des enthaltenen Aluminiums in der Band-III-Fraktion aufweist, wobei das Verfahren das Lösen von metallischem Aluminium in einer wässrigen Ausgangslösung eines basischen Aluminiumhalogenids, ausgewählt aus basischen Alumini-

9

umchloriden und basischen Aluminiumbromiden mit einem molaren Verhältnis von Al:Halogenid bis zu 1,8:1 umfaßt, wobei die Ausgangslösung bei einer Temperatur von etwa 50°C bis etwa 105°C lange genug gehalten wird, um genügend Aluminium zu lösen, um eine wässrige Lösung eines endgültigen basischen Aluminiumhalogenids herzustellen, das ein molares Verhältnis von Aluminium:Halogenid aufweist, das um wenigstens etwa 0,3 größer ist als das des basischen Ausgangshalogenids und im Bereich von 1,7:1 bis 2,2:1 liegt, wobei die Konzentration des Aluminiums in der Ausgangslösung und die Menge an gelöstem Aluminium derart ist, das die Aluminium-Konzentration in der Lösung des endgültigen basischen Aluminiumhalogenids 0,8 bis 6,75 Gew.-% beträgt und das endgültige basische Aluminiumhalogenid wenigstens 20% des enthaltenen Aluminiums in der Band-III-Fraktion aufweist und wenigstens 20% des Aluminiums der Lösung der endgültigen basischen Aluminiumart in Form der $Al_{13}O_{40}$-Art vorliegt.

2.  Verfahren nach Anspruch 1, worin die Ausgangslösung eine wässrige Lösung eines basischen Aluminiumhalogenids mit einem molaren Verhältnis von Al:Halogenid im Bereich von 0,9:1 bis 1,5:1 ist.

3.  Verfahren nach Anspruch 1 oder Anspruch 2, das den weiteren Schritt des Trocknens der Lösung des endgültigen basischen Aluminiumhalogenids umfaßt, um das endgültige basische Aluminiumhalogenid in Form eines hydratisierten Pulvers zu ergeben, das wenigstens 20% des enthaltenen Aluminiums in der Band-III-Fraktion aufweist.

4.  Verfahren nach Anspruch 3, worin das hydratisierte Pulver des endgültigen basischen Aluminiumhalogenids wenigstens 25% des enthaltenen Aluminiums in der Band-III-Fraktion und wenigstens 20% des Aluminiums als $Al_{13}O_{40}$-Art aufweist.

5.  Verfahren nach Anspruch 3 oder Anspruch 4, worin das endgültige basische Aluminiumhalogenidpulver ein molares Verhältnis von Aluminium:Halogenid von 1,9 bis 2,1:1 aufweist.

6.  Verfahren nach einem der Ansprüche 3 bis 5, worin das Trocknen der Lösung des endgültigen basischen Aluminiumhalogenids durch Sprühtrocknen oder Gefriertrocknen durchgeführt wird.

7.  Verfahren nach einem der vorhergehenden Ansprüche, worin die Ausgangslösung des basischen Aluminiumhalogenids eine Lösung eines basischen Aluminiumchlorids ist.